# EUROPÄISCHE PATENTSCHRIFT

(11) **EP 1 600 684 B1**
(45) Veröffentlichungstag und Bekanntmachung des Hinweises auf die Patenterteilung: **20.02.2008**
(21) Anmeldenummer: 05008029.0
(22) Anmeldetag: 13.04.2005
(51) Int. Cl.: F16P 3/14, G01V 8/16

(54) **Justiervorrichtung insbesondere für Lichtschranken oder Lichtgitter und Verfahren zur Justage**
Adjusting device particularly for light curtains or light barriers and method of adjusting
Disposititif de réglage en particulier pour barrières ou rideaux lumineux et procédé de réglage

(30) Priorität: 26.05.2004 DE 102004025751
(43) Veröffentlichungstag der Anmeldung: 30.11.2005
(73) Patentinhaber: SICK AG, 79183 Waldkirch (DE)
(72) Erfinder: Henkel, Olaf, 79276 Reute (DE); Wüstefeld, Martin, 79350 Sexau (DE); Lamprecht, Hans, 79350 Sexau (DE)
(74) Vertreter: Ludewigt, Christoph

(56) Entgegenhaltungen:
- EP-B- 0 889 332
- DE-A1- 10 151 327

## Beschreibung

Die Erfindung betrifft eine Justiervorrichtung nach dem Oberbegriff des Anspruchs 1 sowie eine Lichtschranke oder Lichtgitter nach dem Oberbegriff des Anspruchs 11 und ein Verfahren zur Justage.

Derartige Justiervorrichtungen werden in der Regel verwendet um Lichtschranken oder Lichtgitter aufeinander auszurichten.

In Lichtschranken bzw. Lichtgittern nach dem Einwegprinzip sind der bzw. die Lichtsender in einem ersten Gehäuse und der bzw. die Lichtempfänger in einem zweiten Gehäuse eingebaut. Damit die Lichtsender auf der einen Seite eines zu überwachenden Zugangsbereiches mit den Lichtempfängern auf der anderen Seite des Zugangsbereiches miteinander korrespondieren können ist es notwendig, die beiden Gehäuse gegenseitig aufeinander auszurichten, d. h. sie müssen ggf. linear verschoben, gedreht oder gekippt werden. Aus diesem Grunde ist es bekannt, zum Ausrichten dieser Gehäuse sogenannte Ausrichthilfen zu verwenden. So kann besonders bei großen Abständen vom Lichtsender zum Lichtempfänger die Ausrichtung der Gehäuse mit einem fest eingebauten oder externen adaptierbaren Zielfernrohr durchgeführt werden.

Nachteilig ist, dass die damit verbundenen Kosten und der benötigte Platzbedarf sehr hoch sind. Der zum Ausrichten erforderliche Zeitaufwand ist dabei recht hoch.

Weiterhin ist bekannt, die Justage unter Zuhilfenahme des eigenen Lichtschranken-/ Lichtgittersignals vorzunehmen. Bei dieser Methode wird die Ausrichtung des Lichtsenders und des Lichtempfängers so lange verändert, bis ein Empfangssignal einen maximalen Wert erreicht hat. Dazu ist es bekannt, zum Beispiel in Abhängigkeit von der Größe des Empfangssignals die Blinkfrequenz einer Anzeigediode zu verändern oder beispielsweise ein akustisches Signal auszugeben.

Eine weitere Einrichtung zum Ausrichten der beiden Gehäuse ist aus der EP 0 889 332 B1 bekannt. In dieser Druckschrift wird ein Verfahren und eine Vorrichtung beschrieben, bei der in jedem Gehäuse ein Ausrichtlichtsender zum Aussenden eines Richtstrahles vorhanden ist. Der Auftreffpunkt des Richtstrahls wird bezüglich eines vorbestimmten Referenzpunktes festgestellt und gegebenenfalls die gegenseitige Ausrichtung der Gehäuse aufeinander abgestimmt.
Diese Art der Ausrichtung hat den Nachteil, dass es bei der gegenseitigen geometrischen Ausrichtung der beiden Gehäuse notwendig ist, immer das gegenüberliegende Gehäuse einsehen zu können, um die Ausrichtung durchführen zu können. Dies kann insbesondere bei großen Abständen und hoher Umgebungshelligkeit zu Problemen führen. Besonders schwierig ist diese Art der Ausrichthilfe dann, wenn die Lichtstrahlen der Lichtschranke/Lichtgitter mit Umlenkspiegeln durch einen abgewinkelten Zugangsbereich geführt werden. Außerdem ist diese Ausrichthilfe durch die Tatsache das mehrere genau justierte Umlenkspiegel notwendig sind, insgesamt kostenaufwendig. Zudem wird viel Zeit für die Ausrichtung benötigt.

Aus der DE 101 51 327 A1 ist eine optoelektronische Vorrichtung bekannt zur variablen, richtungsveränderlichen Strahlführung mit einer aktiven Lichtsendeeinheit, die einen Sendestrahl in die Überwachungsstrecke aussendet. In der Überwachungsstrecke wird der Sendestrahl von einer Einkoppeloptik erfasst und in einen Lichtwellenleiter eingekoppelt. Der aus dem Lichtwellenleiter austretende Sendestrahl wird von einer Auskoppeloptik auf einer Lichtempfangseinheit abgebildet. Im Bereich des flexiblen Lichtwellenleiters kann die Richtung der einfallenden und austretenden Teilstrahlen beliebig im Raum verändert werden.

Der Erfindung liegt die Aufgabe zugrunde, eine verbesserte Justiervorrichtung bereitzustellen, mit der ein Gehäuse in einfacher Weise zu einem Richtstrahl genau ausgerichtet werden kann. Eine weitere Aufgabe ist es eine verbesserte Lichtschranke oder Lichtgitter anzugeben sowie ein Verfahren zur Justage.

Der auf eine Vorrichtung gerichtete Teil der Aufgabe wird erfindungsgemäß gemäß Anspruch 1 dadurch gelöst, dass zur Ausrichtung eines Gehäuses das von einem Richtstrahl beaufschlagt wird, wenigstens ein Fokussierungsmittel und mehrere Lichtleiter derart angeordnet sind, dass Lichteintrittsöffnungen der Lichtleiter sich in einer Brennebene des Fokussierungsmittels befinden und Lichtaustrittsöffnungen der Lichtleiter sichtbar angeordnet sind, mit deren Hilfe die optischen Achsen des Gehäuses auf den Richtstrahl ausgerichtet werden.

Der Vorteil dieser erfindungsgemäßen Ausbildung des ersten Gehäuses mit der Justiervorrichtung zur Ausrichtung auf den vom gegenüberliegenden Gehäuse ausgesandten Richtstrahl, ermöglicht die optischen Achsen der in diesem Gehäuse eingebauten Lichtsender/Lichtempfänger exakt auf das zweite Gehäuse auszurichten. Da mit der Justageeinrichtung der Ausrichtzustand des ersten Gehäuses auf den Richtstrahl direkt im Gehäuse angezeigt wird, ist es auch nicht notwendig, dass zur Ausrichtung dieses ersten Gehäuses das zweite Gehäuse eingesehen werden muss.
Der Einsatz der Ausrichthilfe ist bei großen Abständen der Gehäuse und beim Einsatz von Umlenkspiegeln problemlos möglich.

Vorteilhaft kann die Lichtaustrittsöffnung beliebig außerhalb des Gehäuses angebracht werden. Dabei kann die Lichtaustrittsöffnung in einer beliebigen Richtung angeordnet werden. Dadurch ist es möglich das Justageergebnis aus einer gewünschten Richtung einzusehen und das Justageergebnis an eine gewünschte Stelle außerhalb des Gehäuses zu leiten.

Um die Justageinformation zu verbessern sieht die Erfindung vor, die Lichtleiter in der Brennebene symmetrisch anzuordnen. Dadurch wird der Richtstrahl bei nicht optimaler Justage in unterschiedliche Lichtteintrittsöffnungen gelenkt. Vorteilhaft werden die Lichtaustrittsöffnungen geometrisch zu den Lichteintrittsöffnungen angeordnet. Dadurch kann die Justageinformation direkt vom Anwender schlüssig ausgewertet werden. Die geometrische Anordnung lässt einen direkten Rückschluss auf die Ausrichtung zu. Die Justageanzeige bezieht sich damit direkt auf die Ausrichtung des Gehäuses auf den Richtstrahl.

In einer zweckmäßigen Weiterbildung ist es vorgesehen den Lichtleiter als Bildleiter auszubilden. Die Justageanzeige über die Lichtaustrittsöffnung des Bildleiters kann in der Größe den Erfordernissen der Anwendung angepasst werden. Erfindungsgemäß wird dabei die Ausrichtinformation vergrößert abgebildet. Die Justageanzeige ist bei dieser Lösung ein Anzeigefeld innerhalb dessen das Justageergebnis angezeigt wird. Wird die Ausrichtung des Gehäuses verändert, so verändert sich kontinuierlich die Position des Richtstrahles auf der Lichtaustrittsöffnung des Bildleiters.

Die Lichteintrittsöffnung des Bildleiters kann in der Größe den Erfordernissen an die Brennebene angepasst werden. Damit lässt sich die Anzeige des möglichen Justagebereiches erweitern.

Das Fokussierungsmittel wird vorteilhaft als Linse ausgebildet werden. Dies hat den Vorteil, dass die Lichtstrahlen direkt hinter der Linse ausgewertet werden können. Die Auswertung des Richtstahles ist damit hinter dem Eintrittsbereichs des Richtstrahles. In einer weiteren Varianten wird das Fokussierungsmittel als Spiegel mit Brennpunkt ausgebildet. Dabei werden die Lichtstrahlen umgelenkt und können in einer vorteilhaften Richtung ausgewertet werden. Dies ist zum Beispiel von Vorteil wenn bestimmte Gehäuseausprägungen berücksichtigt werden müssen.

Solche Lichtsender und Lichtempfänger sind in Lichtschranken und Lichtgittern vorhanden. Um die Verfügbarkeit solcher Systeme zu erhöhen ist eine genaue Ausrichtung der Lichtsender auf die Lichtempfänger notwendig.
Vorteilhaft kann die Justiervorrichtung in jedem jeweils zweier zugeordneter Lichtsender und Lichtempfänger untergebracht werden. Damit lassen sich Lichtempfänger und Lichtsender gleichermaßen ausrichten.

Bei dem erfindungsgemäßen Verfahren zur Justage des Gehäuses wird der Richtstrahl durch das Fokussierungsmittel in die Brennebene abgebildet. Bei parallel eintreffenden Strahlen werden diese in einem Brennpunkt abgebildet. Ändert sich der Winkel des eintreffenden Richtstrahles so wird der Richtstrahl nach der Fokussierung auf einen anderen Punkt in der Brennebene abgebildet. Der Richtstrahl erreicht damit unterschiedliche Lichteintrittsöffnungen des Lichtleiters.

Im Folgenden wird die Erfindung an Hand von Ausführungsbeispielen unter Bezugnahme auf die Zeichnungen im Einzelnen erläutert.

In den Zeichnungen zeigen:
Figur 1;
   eine schematische Darstellung eines erfindungsgemäßen Lichtgitters;
Figur 2
   eine schematische Darstellung einer erfindungsgemäßen Justiervorrichtung;
Figur 3
   eine schematische Darstellung einer zweiten Ausführungsform der erfindungsgemäßen Justiervorrichtung;
Figur 4
   eine schematische Darstellung einer dritten Ausführungsform der erfindungsgemäßen Justiervorrichtung;
Figur 5 bis 7
   eine schematische Darstellung zur Verdeutlichung des erfindungsgemäßen Verfahrens zur Justage.

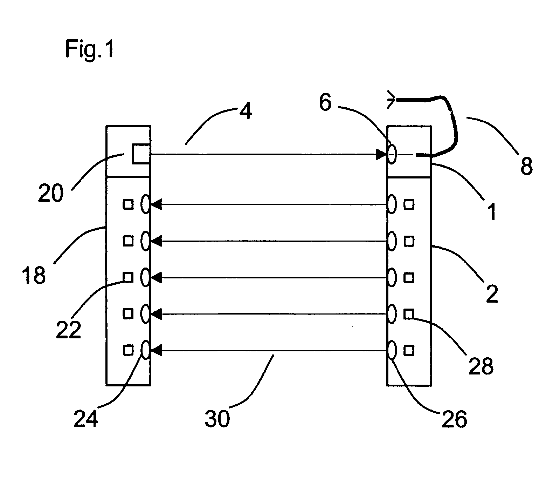

Figur 1 zeigt ein Lichtgitter mit einem ersten Gehäuse 2 und einem zweiten Gehäuse 18. In dem ersten Gehäuse 2 sind mehrere Lichtsender 28 mit Sendeoptiken 26 welche zu Empfangsoptiken 24 in dem zweiten Gehäuse 18 korrespondieren. Die optische Achse der Lichtsender 28 als auch die optische Achse der Lichtempfänger 22 sind dabei exakt innerhalb dem jeweiligen Gehäuse justiert. Im zweiten Gehäuse 18 ist dabei ein Ausrichtlichtsender 20 angebracht dessen Richtstrahl 4 zur optischen Achse der Empfangsoptiken 24 parallel ausgerichtet ist. Dieser Richtstrahl 4 trifft in dem ersten Gehäuse 2 auf eine Justiervorrichtung 1 die selbst zu den Lichtsendern 28 und den Sendeoptiken 26 ausgerichtet ist, so daß bei korrekter Ausrichtung des Richtstrahl 4 auf die Justiervorrichtung 1 das Lichtgitter ausgerichtet ist.

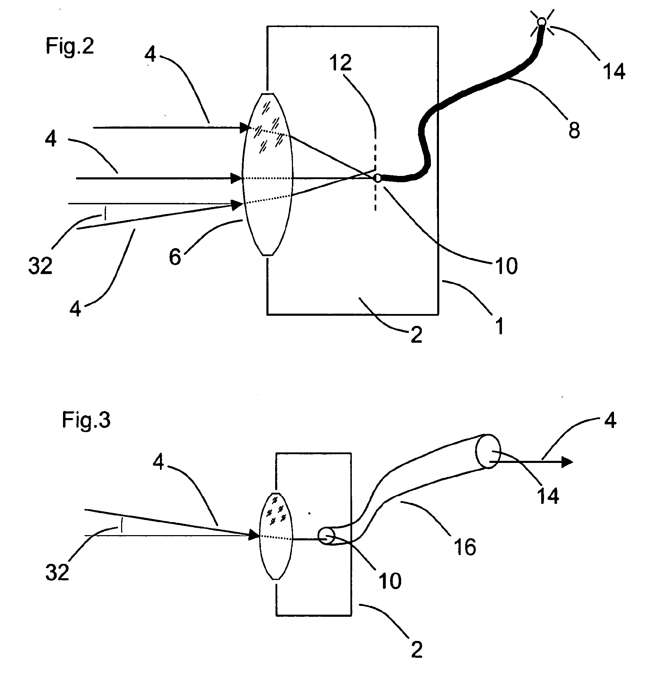

Figur 2 zeigt in dieser ersten Ausführungsform die Justiervorrichtung 1 mit einem Lichtleiter 8 in dem Gehäuse 2. Der Richtstrahl 4 trifft auf ein Fokussierungsmittel 6. Das Fokussierungsmittel 6 ist vorteilhaft als Linse ausgeführt. In einer Brennebene 12 des Fokussierungsmittels 6 ist der Lichtleiter 8 mit seiner Lichteintrittsöffnung 10 angebracht. Der Lichtleiter 8 wird dabei vorteilhaft zentrisch in der Brennebene 12 des Lichtleiters 8 angebracht. Eine Lichtaustrittsöffnung 14 des Lichtleiters wird für den Betrachter vorteilhaft am Gehäuse 2 oder außerhalb des Gehäuses 2 angebracht.

Ist das Gehäuse 2 so ausgerichtet, daß der Richtstrahl 4 parallel zur optischen Achse der Justiervorrichtung liegt, wird der Richtstrahl 4 direkt in die Lichteintrittsöffnung 10 des Lichtleiters 8 gerichtet. Die Lichtaustrittsöffnung 14 des Lichtleiters 8 zeigt dann dem Betrachter dies an. Wird nun das Gehäuse 2 in einem Winkel 32 verändert dann trifft der Richtstrahl 4 nach dem Fokussierungsmittel 6 nicht in die Lichteintrittsöffnung 10 des Lichtleiters 8. Bei einer solchen nicht optimalen Ausrichtung wird über die Lichtaustrittsöffnung 14 weniger oder kein Licht mehr ausgegeben. Auf diese Weise erfolgt eine Justierung des Gehäuses 2 auf den Richtstrahl 4 und damit eine Justierung der Lichtsender 28 die Lichtempfänger 22.

Figur 3 zeigt eine weitere Ausführungsform der Justiervorrichtung 1 mit einem Bildleiter 16 anstelle des Lichtleiters 8 in dem Gehäuse 2. Der Bildleiter 16 ist zentrisch in der Brennebene 12 des Fokussierungsmittels 6 mit seiner Lichteintrittsöffnung 10 angebracht. Trifft nun der Richtstrahl in verschiedenen Winkeln auf das Fokussierungsmittel 6 tritt dieser an verschiedenen Positionen in die Lichteintrittsöffnung 10 des Bildleiters 16 ein. Die verschiedenen Eintrittspositionen werden auf die Lichtaustrittsöffnung 14 des Bildleiters 16 abgebildet und dem Betrachter angezeigt. Wird nun das Gehäuse 2 in einem beliebigen Winkel 32 verändert und trifft der Richtstrahl 4 auf das Fokussierungsmittel 6, und in den Bildleiter 16, so wird bei einer nicht optimalen Ausrichtung der Richtstrahl 4 nicht zentrisch in der Lichtaustrittsöffnung 14 angezeigt.

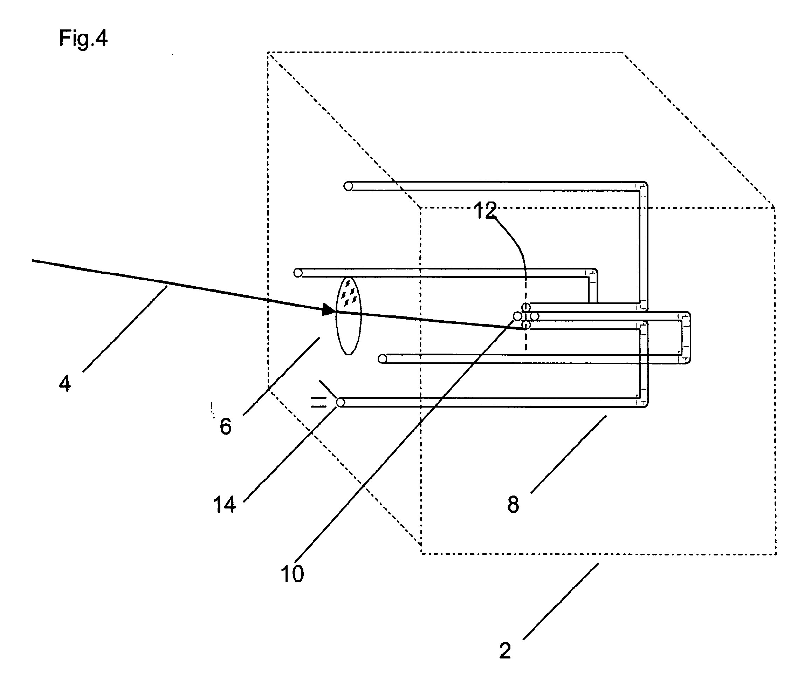

Figur 4 zeigt eine dritte Ausführungsform der Justiervorrichtung 1 mit mehreren Lichtleitern 8. Der eintreffende Richtstrahl 4 trifft auf das Fokussierungsmittel 6 und danach auf eine von mehreren Lichteintrittsöffnungen 10 von mehreren Lichtleitern 8 die symmetrisch in der Brennebene 12 angebracht sind. Je nach der Justage des Gehäuses 2 wird der Richtstrahl 4 in verschiedene Lichtleiter 8 gelenkt. Die geometrische Anordnung der Lichteintrittsöffnungen 10 entspricht dabei der geometrischen Anordnung der Lichtaustrittsöffnungen 14. Trifft der Richtstrahl 4 in der Brennebene 12 die Lichteintrittsöffnung in Figur 4 des unteren Lichtleiters 8, so leuchtet die Lichtaustrittsöffnung 14 des unteren Lichtleiters 8. Die Ausrichtung wird dem Betrachter somit schlüssig angezeigt.

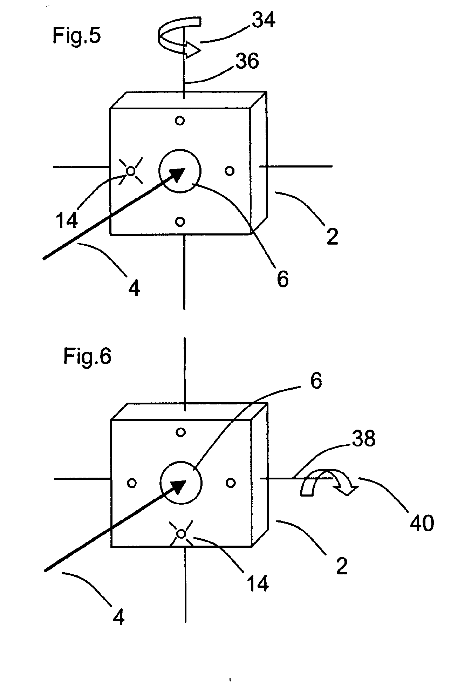

Die Figuren 5 bis 7 zeigen Ausführungsbeispiele für das Ausrichtverfahren mit der Justiervorrichtung 1 nach der dritten Ausführungsform. In Abbildung 5 ist die Justiervorrichtung 1 in Pfeilrichtung 34 um die Achse 36 verdreht. Die Lichtleiter 8 sind dabei wie in der Figur 4 angeordnet. Der Betrachter blickt von vorne auf die Justiervorrichtung 1. Ist die Justiervorrichtung in Pfeilrichtung 34 um die Achse 36 gedreht, so leuchtet vom Betrachter aus die linke Anzeige auf. Der Betrachter ist damit aufgefordert die Justiervorrichtung 1 entgegengesetzt zur Pfeilrichtung 34 um die Achse 36 zu drehen.

In Abbildung 6 ist die Justiervorrichtung 1 in Pfeilrichtung 40 um die Achse 38 verdreht. Die untere Anzeige leuchtet auf. Der Betrachter ist damit aufgefordert die Justiervorrichtung entgegengesetzt zur Pfeilrichtung 40 um die Achse 38 zu drehen.

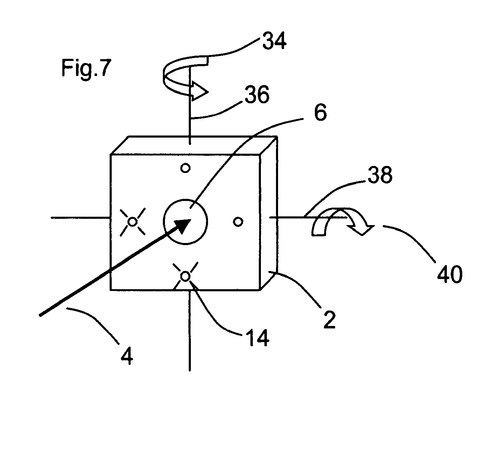

In Abbildung 7 ist die Justiervorrichtung 1 in Pfeilrichtung 34 und 40 um die Achsen 36 und 38 gedreht. Es leuchtet die linke und untere Anzeige auf. Der Betrachter ist hier aufgefordert die Justiervorrichtung 1 entgegengesetzt der Pfeilrichtungen 34 und 40 um die Achsen 36 und 38 zu drehen.

## Patentansprüche

1. Justiervorrichtung, insbesondere für Lichtschranken oder Lichtgitter zur Ausrichtung eines Gehäuses (2) auf einen Richtstrahl (4),
wobei in dem vom Richtstrahl (4) beaufschlagten Gehäuse (2) wenigstens ein Fokussierungsmittel (6) und wenigstens ein Lichtleiter (8) derart angeordnet sind, dass eine Lichteintrittsöffnung (10) des Lichtleiters (8) sich in einer Brennebene (12) des Fokussierungsmittels (6) befindet und eine Lichtaustrittsöffnung (14) des Lichtleiters (8) sichtbar angeordnet ist, **dadurch gekennzeichnet, dass** mehrere Lichtleiter (8) vorgesehen sind, deren Lichteintrittsöffnung (10) in der Brennebene (12) angeordnet sind oder der Lichtleiter (8) als Bildleiter (16) ausgebildet ist.

2. Justiervorrichtung nach einem der vorhergehenden Ansprüche, **dadurch gekennzeichnet, dass** die Lichtaustrittsöffnung (14) des Lichtleiters (8) außerhalb der Justiervorrichtung (1) angebracht ist.

3. Justiervorrichtung nach einem der vorhergehenden Ansprüche, **dadurch gekennzeichnet, dass** die Lichtaustrittsöffnung (14) innerhalb eines Einsichtbereichs (16) angebracht ist.

4. Justiervorrichtung nach einem der vorhergehenden Ansprüche, **dadurch gekennzeichnet, dass** die Lichteintrittsöffnungen (10) der Lichtleiter (8) symmetrisch in der Brennebene (12) angeordnet sind.

5. Justiervorrichtung nach Anspruch 4, **dadurch gekennzeichnet, dass** die geometrische Zuordnung der Lichtaustrittsöffnungen (14) der geometrischen Zuordnung der Lichteintrittsöffnungen (10) entspricht.

6. Justiervorrichtung nach einem der vorgenannten Ansprüche 1-3, **dadurch gekennzeichnet, dass** der Lichtleiter (8) als Bildleiter (16) ausgebildet ist.

7. Justiervorrichtung nach Anspruch 6, **dadurch gekennzeichnet, dass** der Bildleiter (16) eine vergrößerte Abbildung an der Lichtaustrittsöffnung (14) gegenüber der Lichteintrittsöffnung (10) aufweist.

8. Justiervorrichtung nach einem der vorhergehenden Ansprüche, **dadurch gekennzeichnet, dass** das Fokussierungsmittel (6) als Linse ausgebildet ist.

9. Justiervorrichtung nach einem der vorhergehenden Ansprüche, **dadurch gekennzeichnet, dass** das Fokussierungsmittel (6) als Spiegel mit Brennpunkt ausgebildet ist.

10. Lichtschranke oder Lichtgitter mit wenigstens einem in einem ersten Gehäuse (2) angeordneten Lichtsender (28) und mit wenigstens einem in einem zweiten Gehäuse (18) angeordneten und mit dem Lichtsender (28) korrespondierenden Lichtempfänger (22) sowie mit wenigstens einem im ersten oder zweiten Gehäuse eingebauten sichtbaren Ausrichtlichtsender (20) zur Erzeugung wenigstens eines Richtstrahles (4) zur geometrischen Ausrichtung des Lichtsenders (28) auf den gegenüberliegenden Lichtempfänger (22), **dadurch gekennzeichnet, dass** das erste und/oder zweite Gehäuse (2,18) eine Justiervorrichtung (1) nach einem der vorhergehenden Ansprüche aufweist.

11. Verfahren zur Justage eines Gehäuses (2) insbesondere eines Lichtgitters oder einer Lichtschranke bei dem ein Richtstrahl (4) erzeugt wird und ein Auftreffpunkt des Richtstrahls (4) angezeigt wird, wobei der Richtstrahl (4) in eine Brennebene (12) fokussiert wird und in eine Lichteintrittsöffnung (10) eines Lichtleiters (8) gelangt und an einer Lichtaustrittsöffnung (14) des Lichtleiters (8) angezeigt wird zur Ausrichtung des Gehäuses (2), **dadurch gekennzeichnet, dass** die Lichtaustrittsöffnung (14) das Bild des fokussierten Richtstrahles (4) in die Lichteintrittsöffnung (10) des Bildleiters (16) darstellt.

## Claims

1. Adjusting device, in particular for light barriers or light gratings, for the alignment of a housing (2) with a directional beam (4), at least one focusing means (6) and at least one light guide (8) being arranged in such a way in the housing (2) that is subjected to the directional beam (4) that a light entry opening (10) of the light guide (8) is located in a focal plane (12) of the focusing means (6) and a light exit opening (14) of the light guide (8) is visibly arranged, **characterized in that** a number of light guides (8) are provided, the light entry openings (10) of which are arranged in the focal plane (12) or the light guide (8) is formed as an image conductor (16).

2. Adjusting device according to one of the preceding claims, **characterized in that** the light exit opening (14) of the light guide (8) is provided outside the adjusting device (1).

3. Adjusting device according to one of the preceding claims, **characterized in that** the light exit opening (14) is provided inside a viewing region (16).

4. Adjusting device according to one of the preceding claims, **characterized in that** the light entry openings (10) of the light guides (8) are arranged symmetrically in the focal plane (12).

5. Adjusting device according to Claim 4, **characterized in that** the geometrical assignment of the light exit openings (14) corresponds to the geometrical assignment of the light entry openings (10).

6. Adjusting device according to one of the preceding Claims 1-3, **characterized in that** the light guide (8) is formed as an image conductor (16).

7. Adjusting device according to Claim 6, **characterized in that** the image conductor (16) has a magnified formation of the image at the light exit opening (14) in comparison with the light entry opening (10).

8. Adjusting device according to one of the preceding claims, **characterized in that** the focusing means (6) is formed as a lens.

9. Adjusting device according to one of the preceding claims, **characterized in that** the focusing means (6) is formed as a mirror with a focal point.

10. Light barrier or light grating with at least one light transmitter (28), arranged in a first housing (2), and with at least one light receiver (22), arranged in a second housing (18) and corresponding to the light transmitter (28), as well as with at least one visible aligning light transmitter (20), fitted in the first or second housing, for producing at least one directional beam (4) for the geometrical alignment of the light transmitter (28) with the opposite light receiver (22), **characterized in that** the first and/or second housing (2, 18) has an adjusting device (1) according to one of the preceding claims.

11. Method of adjusting a housing (2), in particular of a light grating or a light barrier, in which a directional beam (4) is produced and a point of impingement of the directional beam (4) is indicated, the directional beam (4) being focused in a focal plane (12) and passing into a light entry opening (10) of a light guide (8) and indicated at a light exit opening (14) of the light guide (8) for the alignment of the housing (2), **characterized in that** the light exit opening (14) presents the image of the focused directional beam (4) in the light entry opening (10) of the image conductor (16).

## Revendications

1. Dispositif de réglage, notamment pour des barrières photoélectriques ou des rideaux lumineux, en vue de l'alignement d'un boîtier (2) sur un faisceau directionnel (4),
au moins un moyen de focalisation (6) et au moins un guide de lumière (8) étant agencés de telle sorte dans le boîtier (2) recevant le faisceau directionnel (4) qu'un orifice d'entrée de lumière (10) du guide de lumière (8) se trouve dans un plan focal (12) du moyen de focalisation (6) et qu'un orifice de sortie de lumière (14) du guide de lumière (8) est agencé visible, **caractérisé par le fait qu'**il est prévu plusieurs guides de lumière (8) dont les orifices d'entrée de lumière (10) sont agencés dans le plan focal (12) ou que le guide de lumière (8) est conçu comme un guide d'images (16).

2. Dispositif de réglage selon l'une des revendications précédentes, **caractérisé par le fait que** l'orifice de sortie de lumière (14) du guide de lumière (8) est placé en dehors du dispositif de réglage (1).

3. Dispositif de réglage selon l'une des revendications précédentes, **caractérisé par le fait que** l'orifice de sortie de lumière (14) est placé à l'intérieur d'une zone d'observation (16).

4. Dispositif de réglage selon l'une des revendications précédentes, **caractérisé par le fait que** les orifices d'entrée de lumière (10) des guides de lumière (8) sont agencés symétriquement dans le plan focal (12).

5. Dispositif de réglage selon la revendication 4, **caractérisé par le fait que** la disposition géométrique des orifices de sortie de lumière (14) correspond à la disposition géométrique des orifices d'entrée de lumière (10) .

6. Dispositif de réglage selon l'une des revendications précitées 1 à 3, **caractérisé par le fait que** le guide de lumière (8) est conçu comme un guide d'images (16).

7. Dispositif de réglage selon la revendication 6, **caractérisé par le fait que** le guide d'images (16) comporte une reproduction agrandie à l'orifice de sortie de lumière (14) par rapport à l'orifice d'entrée de lumière (10).

8. Dispositif de réglage selon l'une des revendications précédentes, **caractérisé par le fait que** le moyen de focalisation (6) est conçu comme une lentille.

9. Dispositif de réglage selon l'une des revendications précédentes, **caractérisé par le fait que** le moyen de focalisation (6) est conçu comme un miroir avec foyer.

10. Barrière photoélectrique ou rideau lumineux avec au moins un émetteur de lumière (28) placé dans un premier boîtier (2) et avec au moins un récepteur de lumière (22) placé dans un deuxième boîtier (18) et correspondant avec l'émetteur de lumière (28) ainsi qu'avec au moins un émetteur de lumière d'alignement (20) visible monté dans le premier ou le deuxième boîtier et destiné à produire au moins un faisceau directionnel (4) pour l'alignement géométrique de l'émetteur de lumière (28) sur le récepteur de lumière (22) placé en face, **caractérisée par le fait que** le premier et/ou le deuxième boîtier (2, 18) comporte un dispositif de réglage (1) selon l'une des revendications précédentes.

11. Procédé de réglage d'un boîtier (2) notamment d'un rideau lumineux ou d'une barrière photoélectrique, dans lequel un faisceau directionnel (4) est produit et un point d'incidence du faisceau directionnel (4) est montré, le faisceau directionnel (4) étant focalisé dans un plan focal (12), arrivant dans un orifice d'entrée de lumière (10) d'un guide de lumière (8) et étant montré à un orifice de sortie de lumière (14) du guide de lumière (8) en vue de l'alignement du boîtier (2), **caractérisé par le fait que** l'orifice de sortie de lumière (14) représente l'image du faisceau directionnel focalisé (4) dans l'orifice d'entrée de lumière (10) du guide d'images (16).
